(19) **Europäisches Patentamt**

**European Patent Office**

**Office européen des brevets**

(11) **EP 0 804 365 B1**

(12) **EUROPÄISCHE PATENTSCHRIFT**

(45) Veröffentlichungstag und Bekanntmachung des Hinweises auf die Patenterteilung:
**08.11.2000   Patentblatt 2000/45**

(51) Int Cl.⁷: **B65B 21/04**, B65G 47/28, B65G 47/244, G01N 21/90

(21) Anmeldenummer: **96941019.0**

(22) Anmeldetag: **25.11.1996**

(86) Internationale Anmeldenummer:
**PCT/EP96/05193**

(87) Internationale Veröffentlichungsnummer:
**WO 97/19853 (05.06.1997 Gazette 1997/24)**

(54) **VERFAHREN UND VORRICHTUNG ZUM DREHEN VON ROTATIONSSYMMETRISCHEN BEHÄLTERN, WIE FLASCHEN, WÄHREND DES TRANSPORTS UNTER STAUDRUCK**

PROCESS AND DEVICE FOR ROTATING ROTATIONALLY SYMMETRICAL CONTAINERS SUCH AS BOTTLES DURING TRANSPORT UNDER DYNAMIC PRESSURE

PROCEDE ET DISPOSITIF POUR FAIRE TOURNER DES CONTENANTS A SYMETRIE DE ROTATION, TELS QUE DES BOUTEILLES, PENDANT LEUR TRANSPORT EFFECTUE SOUS PRESSION DYNAMIQUE

(84) Benannte Vertragsstaaten:
**AT BE CH DE DK ES FI FR GB GR IE IT LI NL SE**

(30) Priorität: **24.11.1995   DE 29518628 U**

(43) Veröffentlichungstag der Anmeldung:
**05.11.1997   Patentblatt 1997/45**

(73) Patentinhaber: **HEUFT SYSTEMTECHNIK GMBH 56659 Burgbrohl (DE)**

(72) Erfinder:
• **HEUFT, Bernhard
  D-56659 Burgbrohl (DE)**
• **GOLLER, Hans-Ulrich
  D-53173 Bonn-Bad Godesberg (DE)**

(74) Vertreter: **Abitz, Walter, Dr.-Ing. et al
Patentanwälte Abitz & Partner
Postfach 86 01 09
81628 München (DE)**

(56) Entgegenhaltungen:
EP-A- 0 245 806          EP-A- 0 643 296
WO-A-83/00135           DE-A- 1 786 483
GB-A- 2 135 447         US-A- 2 725 138

**Beschreibung**

Die Erfindung betrifft ein Verfahren und eine Vorrichtung zum Drehen von rotationssymmetrischen Behältern, wie Flaschen, während des Transports auf einer Förderfläche. Die Behälter werden unter Staudruck transportiert und werden während des Transports geführt, wozu die Förderfläche auf jeder Seite eine Führungseinrichtung oder ein Geländer aufweist (siehe z. B. WO-A-8 300 135). Die Erfindung betrifft ferner den Einsatz einer solchen Vorrichtung zur Inspektion der Seitenwand oder zur Kontrolle der Etiketten von sich drehenden Behältern sowie zum Transport von rotationssymmetrischen Behältern unter Staudruck.

Insbesondere Leerflaschen aus Glas oder Kunststoff werden zum Inspizieren ihrer Seitenwände um ihre Achse gedreht. Aus EP-A-0 415 154 ist eine Seitenwandinspektionseinrichtung bekannt, bei der die seitlichen Führungseinrichtungen aus Bändern bestehen, die zu beiden Seiten der Förderfläche angeordnet sind und mit unterschiedlichen Geschwindigkeiten angetrieben werden, so daß die zwischen den Bändern festgehaltenen Leerflaschen um ihre Längsachse gedreht werden. Diese Vorrichtung setzt voraus, daß die Leerflaschen zuvor vereinzelt worden sind oder zumindest staudrucklos auf der Förderfläche herangeführt werden. Falls die Leerflaschen nicht bereits drucklos angeordnet sind, ist es daher notwendig, die Leerflaschen zu vereinzeln.

Aus GB-A-2 135 447 ist es bekannt, Getränkeflaschen bei der Inspektion angerollter Schraubverschlüsse um ihre Längsachse zu drehen, indem die Getränkeflaschen auf der einen Seite von einem angetriebenen Band erfaßt werden und auf der anderen Seite an einem feststehenden Geländer anliegen, so daß sie an diesem Geländer abrollen.

Aus DE-A-1 786 483 ist eine Vorrichtung zum Verteilen von zylindrischen Dosen, die in dichter Folge auf einem Transportband ankommen, auf zwei Transportbänder bekannt. Die Transportbänder haben seitliche Geländer und jede zweite der Dosen wird durch ein sternförmiges Verteilerrad zum gegenüberliegenden Geländer abgedrängt wird. Die auf das Verteilerrad zukommenden Dosen werden durch seitliche Geländer geführt, deren Abstand gleich dem Durchmesser der Dosen ist, während auf der Seite der das Verteilerrad verlassenden Dosen der Abstand der Geländer größer, aber kleiner als die doppelte Breite der Dosen ist. Die Dosen werden durch das Verteilerrad dadurch abwechselnd zur einen und zur anderen Seite versetzt angeordnet. Durch eine Trennwand in der Mitte des Förderbandes werden die Dosen dann auf zwei Förderbänder verteilt.

Der Erfindung liegt die Aufgabe zugrunde, das Drehen von unter Staudruck beförderten Behältern um ihre Längsachse in einfacher Weise zu ermöglichen.

Gemäß dem erfindungsgemäßen Verfahren wird diese Aufgabe dadurch gelöst, daß an der Stelle, an der sich die Behälter drehen sollen, der Abstand der Geländer das 1,2- bis 1,6fache des Durchmessers der Behälter beträgt und daß in Förderrichtung nach dieser Stelle von zwei aufeinanderfolgenden Behältern der eine stabil gegen das eine Geländer und der andere stabil gegen das andere Geländer angeordnet wird.

Im Rahmen der erfindungsgemäßen Vorrichtung wird die Aufgabe dadurch gelöst, daß am Ausgang der Vorrichtung eine Stabilisierungseinrichtung zur stabilen Anordnung des ersten von zwei aufeinanderfolgenden Behältern an dem einen Geländer und dadurch des anderen Behälters an dem anderen Geländer vorgesehen ist und daß in dem der Stabilisierungseinrichtung vorausgehenden Bereich der Förderfläche der Abstand der Geländer das 1,2- bis 1,6fache des Durchmessers der Behälter beträgt.

Gegenstand der Erfindung ist auch eine Vorrichtung zur Inspektion der Seitenwand oder zur Kontrolle der Etiketten von sich drehenden Behältern die auf einem Transporteur transportiert werden, mit einer Strahlungsquelle auf der einen Seite des Transporteurs und einer Erkennungseinrichtung auf der anderen Seite des Transporteurs, wobei die Behälter durch eine erfindungsgemäße Vorrichtung im Sichtfeld der Erfassungseinrichtung gedreht werden.

Gegenstand der Erfindung ist ferner eine Vorrichtung zum Transport von rotationssymmetrischen Behältern auf einer Förderfläche unter Staudruck, wobei auf jeder Seite der Förderfläche ein Geländer angeordnet ist und wobei mindestens eine erfindungsgemäße Vorrichtung verwendet wird.

Aus DE-C-843 973 und DE-C-922 517 sind Vorrichtungen zum Transport von Leerflaschen unter Staudruck bekannt, bei denen aufeinanderfolgende Leerflaschen abwechselnd zu dem linken und zu dem rechten Geländer hin versetzt sind. Bei diesen Vorrichtungen pflanzen sich jedoch Störungen, die zu einem Wechsel der Position eines Behälters von einem Geländer zum anderen Geländer führen, vom Auslaufende der Fördereinrichtung entgegen der Transportrichtung fort. Eine solche Positionsänderung führt dann auch zu einer Umkehrung der Drehrichtung der einzelnen Leerflaschen, so daß eine definierte Drehung der Leerflaschen nicht erzielbar ist.

Nach dem Grundgedanken der vorliegenden Erfindung wird durch eine stabile Anordnung von mindestens zwei Behältern an dem linken bzw. rechten Geländer verhindert, daß nach diesen Behältern eine solche Störung und ein dadurch verursachter Positionswechsel der einzelnen Behälter erfolgt.

Alle nachfolgenden Behälter liegen stabil an einem der beiden Geländer an und rollen am Geländer und aneinander ab, wobei die Behälter mit abwechselnder Drehrichtung abwechselnd am linken und am rechten Geländer abrollen.

Aus US-A-2 725 138 ist eine Vorrichtung zum Transportieren rotationssymmetrischer Behälter bekannt, wobei sich die Behälter am Ende der Förderfläche stauen und an den seitlichen Geländern abrollen. Am Ende der Förderfläche werden die Behälter mittels eines Sternrads in definierten Abständen auf einer weiteren Transportvorrichtung angeordnet. Bei der Übernahme durch das Sternrad wird jeder Behälter seitlich gegen dasselbe Geländer verschoben. Die Behälter, die zuvor an dem anderen Geländer positioniert waren, wechseln also ihre Position. Diese Positionsänderung bewirkt, daß alle nachfolgenden Behälter ebenfalls ihre Position und damit auch ihre Drehrichtung ändern.

Die Förderfläche kann beweglich oder feststehend sein. Bewegliche Förderflächen werden durch Förderbänder, Gliederkettenförderer, Luftkissen, Röllchen und dergleichen gebildet. Feststehende Förderflächen können einfache Gleitbleche sein, auf die mittels Staudruck die Behälter geschoben werden, wobei der Staudruck durch ein Sternrad oder einen vorgeschalteten Gliederkettenförderer erzeugt werden kann. Die Bezeichnung "Transporteur" soll hier alle diese Arten von Förderflächen umfassen.

Bei einer ersten Ausführungsform der Einrichtung zur Stabilisierung der Lage von mindestens zwei aufeinanderfolgenden Behältern wird der Abstand der beiden Geländer in Förderrichtung zunächst allmählich auf das etwa 1,5fache des Durchmessers der Behälter erweitert und dann unter einem Winkel der beiden Geländer zueinander von etwa 30 bis 100°, vorzugsweise 50 bis 80°, auf etwas mehr als den Durchmesser der Behälter verkleinert. Vorzugsweise ist der Verlauf der Geländer in diesem Bereich spiegelbildlich oder symmetrisch zur Mittellinie des Transporteurs.

Der Abstand der beiden Geländer wirkt sich auf die Druckverhältnisse im Strom der Behälter aus. Es gelten folgende Beziehungen:

$$\alpha = \arcsin(V/D)$$

$$V = D - d$$

$$F_{1n} = (2 \cdot n - 1) \cdot F_R \cdot \frac{\sin\alpha}{\cos\alpha} = (2 \cdot n - 1) \cdot F_R \cdot \tan\alpha$$

$$F_{2n} = \frac{n \cdot F_R}{\cos\alpha}$$

wobei,

V = seitliche Versetzung aufeinanderfolgender Behälter;

D = Abstand der seitlichen Geländer (Breite des Transporteurs)

d = Durchmesser der Behälter;

$\alpha$ = Winkel zwischen der Verbindungslinie zweier aufeinanderfolgender Behälter und der Transportrichtung;

$F_{1n}$ = die auf das Geländer wirkende Kraft des n-ten Behälters;

$F_{2n}$ = der auf den nachfolgenden Behälter wirkende Kraftanteil;

$F_R$ = Reibungskraft zwischen Behälter und Geländer.

Die Vorrichtung arbeitet in einem weiten Bereich des Staudrucks stabil. In der Praxis ergeben sich allerdings durch unterschiedlichste Einflüsse extreme Situationen, die zu Störungen des Drehverhaltens der Behälter führen können. Diese Einflüsse können durch zusätzliche Maßnahmen abgemildert werden, so daß eine Störung des Betriebs weitgehend verhindert wird. Sehr starker Druck am stromaufwärtigen Ende der Vorrichtung kann durch einen mechanischen Widerstand im Verlauf des Transporteurs vor der Vorrichtung abgebaut werden. Z.B. kann ein dünnes Blech auf dem Transporteur angeordnet werden, über welches die Behälter rutschen und dadurch eine zusätzliche Reibung erfahren. Auch können mittels der Seitengeländer Schikanen aufgebaut werden, die Druckspitzen abbauen. Auch durch die erfindungsgemäße Vorrichtung selbst wird der Staudruck abgebaut, so daß durch eine vorausgehende Vorrichtung der Staudruck für eine nachfolgende Vorrichtung verringert wird. Besteht umgekehrt ein zu geringer Staudruck, so kann durch einen seitlich angeordneten mitlaufenden Riemen dem Behälter eine in Transportrichtung zeigende Kraft erteilt werden.

Durch das Verkleinern des Abstandes des Geländers unter einem relativ großen Winkel wird erreicht, daß in dem Fall, daß ein sich am wieder verengten Abschnitt des Transporteurs befindender Behälter seine Position vom einen zum anderen Geländer ändert, dies keinen Einfluß auf die Position des nachfolgenden, sich noch innerhalb des verengenden Bereichs befindlichen Behälters hat; der Druckpunkt zwischen beiden Behältern verschiebt sich wegen des engen Bewegungsspielraums des vorauslaufenden Behälters nämlich nur so wenig, daß der nachfolgende Behälter nicht gezwungen wird, seine Position zum anderen Geländer hin zu ändern. Damit wird das chaotische Verhalten der Behälter unterbrochen und wird eine eindeutige und stabile Konstellation der Behälter erreicht.

In einer zweiten Ausführungsform wird die Einrichtung zur Stabilisierung der Lage von mindestens zwei aufeinanderfolgenden Behältern durch ein Sternrad gebildet, das um eine vertikale Achse drehbar neben dem Transporteur angeordnet ist und am Umfang Ausschnitte abwechselnd unterschiedlicher Tiefe mit einer etwa dem Behälterdurchmesser entsprechenden Teilung aufweist, so daß die Zähne jeden zweiten Behälter gegen das gegenüberliegende Geländer legen, während die dazwischenliegenden Behälter infolge der Ausschnitte an dem anliegenden Geländer anliegen können. Es können auch zwei derartige Sternräder miteinander kämmend links und rechts neben dem Transporteur angeordnet sein, wobei die Behälter dann zwischen den beiden Sternrädern durchlaufen.

Eine stabile Anordnung der Behälter abwechselnd an dem einen und dem anderen Geländer ist auch mittels einer neben dem Transporteur angeordneten Schnecke möglich.

Normalerweise ist der Abstand der beiden Geländer nur geringfügig, z.B. 1 bis 10 mm, größer als der Durchmesser der Behälter. Für Transportzwecke wurde bislang ein solcher Abstand der Geländer als ausreichend angesehen und wurde das Hin- und Herspringen der Behälter vom einen Geländer zum anderen und die damit verbundene Änderung der Drehrichtung während des Transports als unvermeidlich in Kauf genommen. Durch die Erfindung kann dieses chaotische Verhalten verhindert werden. In dem Bereich, in dem ausgehend von der Stabilisierungseinrichtung entgegen der Förderrichtung jeder Behälter eine definierte Lage und einen definierten Drehsinn haben soll, ist der gleichbleibende Abstand der Geländer dabei größer als der oben angegebene Abstand und beträgt das 1,2- bis 1,6fache, vorzugsweise das 1,4- bis 1,5fache des Durchmessers der Behälter.

Innerhalb dieses Bereichs mit vergrößertem Abstand der beiderseitigen Geländer drehen sich die Behälter abwechselnd im entgegengesetzten Sinn um ihre vertikale Achse und rollen dabei jeweils abwechselnd am linken und am rechten Geländer ab. Die Stabilität der Lage der Behälter wird noch dadurch verbessert, daß die Reibung der Behälter untereinander größer ist als die Reibung zwischen ihnen und dem Boden, d.h. dem Transporteur, und den Geländern.

Die erfindungsgemäße Vorrichtung kann generell bei einer Handhabung und Inspektion der Behälter eingesetzt werden, bei denen eine Drehung der Behälter erforderlich ist.

Die erfindungsgemäße Vorrichtung kann für alle Arten der Behälterinspektion, die eine Abwicklung der Oberfläche oder ein Drehen der Behälter erfordern, eingesetzt werden, z.B. zur Kontrolle des Etikettensitzes, der Mündung oder des Gewindes, zur Prüfung der Rotationssymmetrie der Behälter, zur Seitenwandkontrolle etc., wobei dann keine weiteren Einrichtungen zum Drehen der Behälter erforderlich sind. Die Seitenwandinspektion findet dabei zweckmäßig in einem Bereich statt, in dem sich die Behälter - von der Seite betrachtet - möglichst wenig überlappen, aber bereits eine stabile Lage an einem der beiden Geländer eingenommen haben. Dies ist im allgemeinen der Bereich, in dem der Abstand der beiden Geländer etwa das 1,2fache des Flaschendurchmessers beträgt.

Die erfindungsgemäße Vorrichtung kann jedoch auch zur Verminderung des Lärms und des Verschleißes der Behälter im Staubereich von Transporteinrichtungen eingesetzt werden. Dadurch, daß die Behälter kontrolliert am Geländer und aneinander abrollen, wird der Lärm und der Verschleiß wesentlich verringert. Beim Einsatz der erfindungsgemäßen Vorrichtung für diesen Zweck über größere Strecken kann es zweckmäßig sein, mehrere der Vorrichtungen über die Strecke verteilt anzuordnen, z.B. in weitgestellten Geländern (ca. 1,5facher Flaschendurchmesser), die zur zusätzlichen Verminderung von Lärm und Verschleiß mit einer weichen Oberfläche versehen sein können.

Weiterhin läßt sich die erfindungsgemäße Vorrichtung aufgrund der kontrollierten Oberflächenabwicklung rotationssymmetrischer Körper auch zum Bedrucken, Beschichten, Folieren oder zum Aufbringen von Etiketten oder Verschlüssen auf Behältern verwenden. Ebenso ist das gezielte Entfernen von Folien, Etiketten oder Verschlüssen mit der erfindungsgemäßen Vorrichtung möglich.

Vorteilhaft ist bei der erfindungsgemäßen Vorrichtung ferner, daß die meisten der derzeit eingesetzten Flaschen-Füllmaschinen in ihrem Einlauf Staudruck benötigen. Durch die erfindungsgemäße Vorrichtung entfällt dadurch nicht nur das Vereinzeln der Flaschen vor der Seitenwandinspektionseinrichtung sondern auch die Einrichtung zur Erzeugung des Staudrucks vor der Füllmaschine.

Ausführungsbeispiele der Erfindung werden nachfolgend anhand der Zeichnung erläutert. Es zeigen:

Fig. 1 in Draufsicht die Vorrichtung zum Drehen von Leerflaschen in Verbindung mit einer Einrichtung zur Seitenwandinspektion;

Fig. 2 im Vertikalschnitt mit Blick in Richtung des Transporteurs die Vorrichtung von Fig. 1;

Fig. 3 in Draufsicht ein anderes Ausführungsbeispiel der Vorrichtung zum Drehen von Behältern;

Fig. 4 ein weiteres Ausführungsbeispiel der Vorrichtung zum Drehen von Behältern und

Fig. 5 den Verlauf des Geländers für Flaschen mit 55-87 mm Durchmesser.

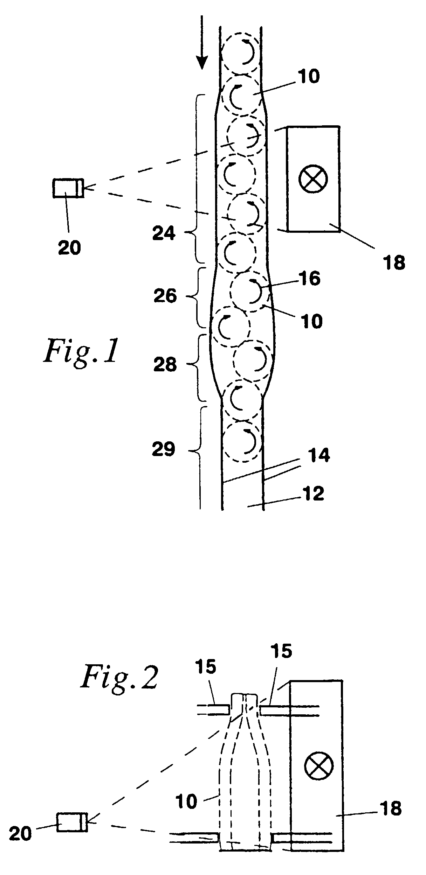

Gemäß Fig. 1 werden Leerflaschen 10 auf einem Transporteur 12, z.B. einem Förderband oder einem Gliederkettenförderer, in Pfeilrichtung transportiert. Auf jeder Seite des Transporteurs 12 befindet sich ein feststehendes Geländer 14, so daß die Leerflaschen 10 auch bei Staudruck auf dem Transporteur 12 gehalten werden. Wie durch die einzelnen Pfeile 16 angegeben, drehen sich die Flaschen 10 durch ihren gegenseitigen Kontakt und den Kontakt mit den Geländern 14 abwechselnd in entgegengesetzter Richtung, wobei die Flaschen 10 abwechselnd am linken und am rechten Geländer 14 anliegen.

Eine Inspektionsstation zum Inspizieren der Seitenwände der Flaschen 10 ist vorgesehen, die eine neben dem Transporteur 12 angeordnete Strahlungsquelle 18 und eine auf der gegenüberliegenden Seite angeordnete Erfassungseinrichtung, z.B. eine CCD-Kamera 20, aufweist. Beide sind von üblicher Bauart und Funktionsweise und werden daher nicht näher beschrieben. Innerhalb der normalen Transportbereiche befindet sich das Geländer 14 etwa auf halber Höhe der Leerflaschen 10. Im Bereich der Inspektionsstation ist das Geländer 14 tiefer angeordnet, so daß die Leerflaschen 10 durch das Geländer 14 am unteren Rand gehalten werden. Durch ein zusätzliches Geländer 15 werden die Leerflaschen oben am Flaschenhals geführt (Fig. 2). Eines der beiden Geländer 14, 15, vorzugsweise das untere Geländer 14, kann mit einem Belag höherer Reibung versehen sein. Am oberen Geländer 15 gleiten die Leerflaschen 10 dann. Wird die erfindungsgemäße Vorrichtung in Verbindung mit einer Vorrichtung zur Bodeninspektion gemäß der gleichzeitig eingereichten PCT-Anmeldung "Verfahren und Vorrichtung zum Transportieren von Behältern vorbei an einer Einrichtung zum Inspizieren des Bodens der Behälter" (EP 96 941 018) verwendet, so kann es sich bei diesem zusätzlichen Geländer 15 um eine Fortsetzung der Halsführung gemäß Fig. 2 dieser gleichzeitig eingereichten PCT-Anmeldung handeln. Das Ausleiten der bei der Bodeninspektion oder der Seitenwandinspektion als fehlerhaft erkannten Behälter kann durch eine Vorrichtung gemäß der ebenfalls gleichzeitig eingereichten PCT-Anmeldung "Vorrichtung zum Ausleiten von einzelnen oder mehreren rotationssymmetrischen Behältern aus einem unter Staudruck geförderten Strom der rotationssymmetrischen Behälter und Zylinder mit gesteuert ausfahrbarem Kolben" (EP 96 939 917) erfolgen.

Werden Leerflaschen unter Staudruck auf einem Transporteur mit im wesentlichen gleichbleibendem Abstand der seitlichen Geländer transportiert, so ist die Lage der Flaschen instabil, d.h. die Flaschen springen bisweilen in chaotischer Weise vom einen Geländer zum gegenüberliegenden Geländer oder ändern ihre Drehrichtung. Durch die erfindungsgemäße Vorrichtung wird erreicht, daß die einzelnen Flaschen 10 innerhalb eines bestimmten Bereichs stabil an einem der beiden Geländer 14 anliegen und ihre Drehrichtung beibehalten. Am Ausgang der Vorrichtung beträgt der Abstand der beiden Geländer 14 dabei etwas mehr als den Durchmesser der Flaschen 10, wie es für den Transport unter Staudruck üblich ist. Dieser Abstand wird dann innerhalb einer Länge, die etwa dem Durchmesser der Flaschen 10 entspricht auf das 1,2- bis 1,3fache des Durchmessers der Flaschen 10 vergrößert. Dieser vergrößerte Abstand wird dann innerhalb eines ersten Bereichs 24 beibehalten, dessen Länge vom Anwendungsfall abhängt. Für eine Seitenwandinspektion genügt es, wenn die Länge dieses ersten Bereichs 24 etwa dem 4fachen Flaschendurchmesser entspricht. In dem darauffolgenden zweiten Bereich 26 vergrößert sich der Abstand der Geländer 14 allmählich, d. h. etwa innerhalb einer Länge die dem 2- bis 3fachen Flaschendurchmesser entspricht, auf das 1,5fache des Flaschendurchmessers und verringert sich dann innerhalb eines wesentlich kürzeren, dritten Bereichs 28, dessen Länge etwa dem 1,5fachen des Flaschendurchmessers entspricht, wieder auf die Ausgangslänge von etwas mehr als dem Flaschendurchmesser.

Störungen der Lage der Flaschen 10 nehmen im allgemeinen ihren Ausgang am Auslaufende eines Tranporteurs, z.B. durch die Entnahme einer Flasche, und breiten sich entgegen der Förderrichtung aus. Ändert die letzte Flasche ihre Position von links nach rechts so ändert sich der Druckpunkt gegenüber der vorletzten Flasche so, daß diese von rechts nach links springt und dieser Positionswechsel pflanzt sich dann entgegen der Förderrichtung über die gesamte Länge des Transporteurs fort. Dadurch daß am Auslaufende des dritten Bereichs 28 die Flaschen sehr stark gegeneinander versetzt sind, und insbesondere die letzte Flasche 11 innerhalb des dritten Bereichs 28 relativ weit seitlich von der darauffolgenden Flasche 10, die sich wieder in dem daran anschließenden engen Bereich 29 befindet, versetzt ist, ändert sich der Druckpunkt zwischen diesen beiden Flaschen bei einer Lageänderung der Flasche in dem engen Bereich 29 nicht so stark, daß die letzte Flasche in dem dritten Bereich 28 ihre Position zum anderen Geländer 14 hin ändert.

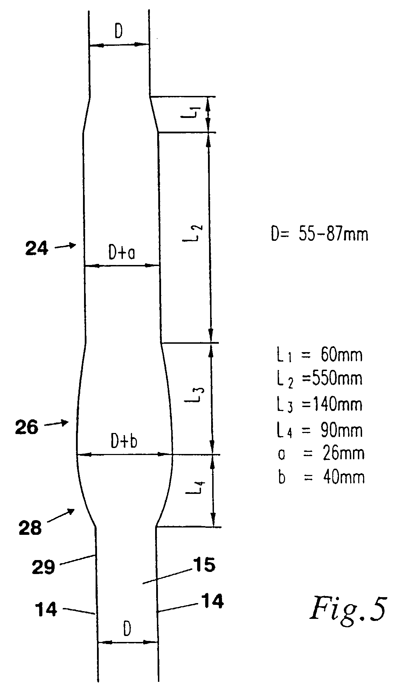

In Fig. 5 ist der Verlauf der Geländer 14 bei einem Transporteur 12 gezeigt, mit dem Flaschen transportiert werden, deren Durchmesser D im Bereich von 55 bis 87 mm liegt. $L_2$ ist dabei die Länge des ersten Bereichs 24, $L_3$ die des zweiten Bereichs 26 und $L_4$ die des dritten Bereichs 28. Am Eingang und Ausgang (Bereich 29) ist der seitliche Abstand der Geländer einige Millimeter größer als der Flaschendurchmesser D.

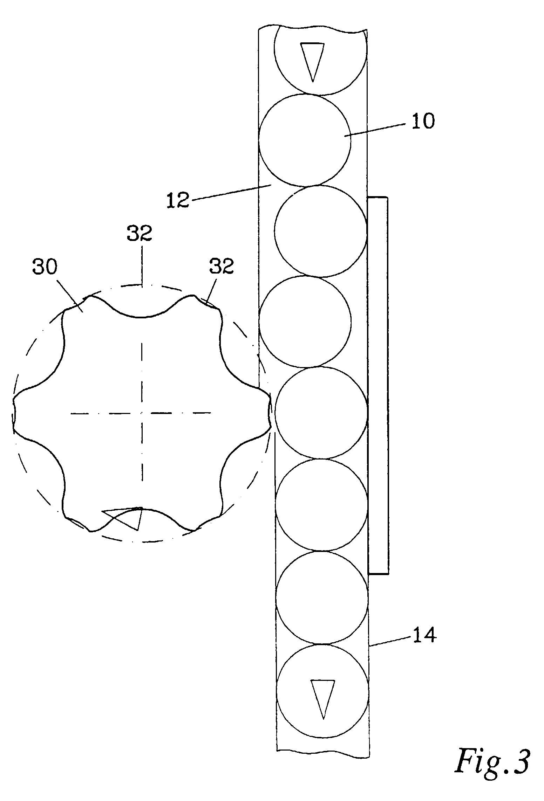

Fig. 2 zeigt im Schnitt mit Blick entgegen der Transportrichtung die Einrichtung zur Seitenwandinspektion. Die Seitenwandinspektion ist im ersten Bereich 24 angeordnet, da dort der Abstand der Geländer 14 nur das 1,2- bis 1,3fache des Flaschendurchmessers beträgt, so daß sich die Flaschen 10 von der Seite betrachtet nur geringfügig überlappen. Das Sichtfeld der Kamera ist so gewählt, daß mehrere Flaschen gleichzeitig erfaßt werden und sich durch die Drehung jeder Flasche eine vollständige Abwicklung der Seitenwand jeder Flasche innerhalb dieses Sichtfelds der Kamera ergibt. Damit kann jeder Punkt auf der Flaschenoberfläche mindestens einmal überprüft werden. Fig. 3 zeigt ein Ausführungsbeispiel, bei dem die Einrichtung zur Stabilisierung der Lage und Drehrichtung der Behälter 10 durch ein seitlich neben dem Transporteur 12 um eine vertikale Achse drehbar angeordnetes Sternrad 30 gebildet wird. Das Sternrad 30 hat eine Teilung gleich etwa dem Durchmesser der Behälter 10 und Ausschnitte 32 abwechselnd unterschiedlicher Tiefe. Das Sternrad 30 drückt durch diese Ausbildung jeden zweiten Behälter 10 gegen das gegenüberliegende Geländer, so daß die dazwischenstehenden Behälter 10 sich zwangsläufig an das der Drehachse des Sternrads 30 nahe Geländer 14 anlegen. Durch diese zwangsweise Positionierung der Behälter 10 durch das Sternrad 30 kann sich eine Störung nicht entgegen der Transportrichtung über das Sternrad 30 hinaus fortpflanzen. Jeder Behälter 10 kann auch zwischen zwei Sternrädern 30 festgehalten werden.

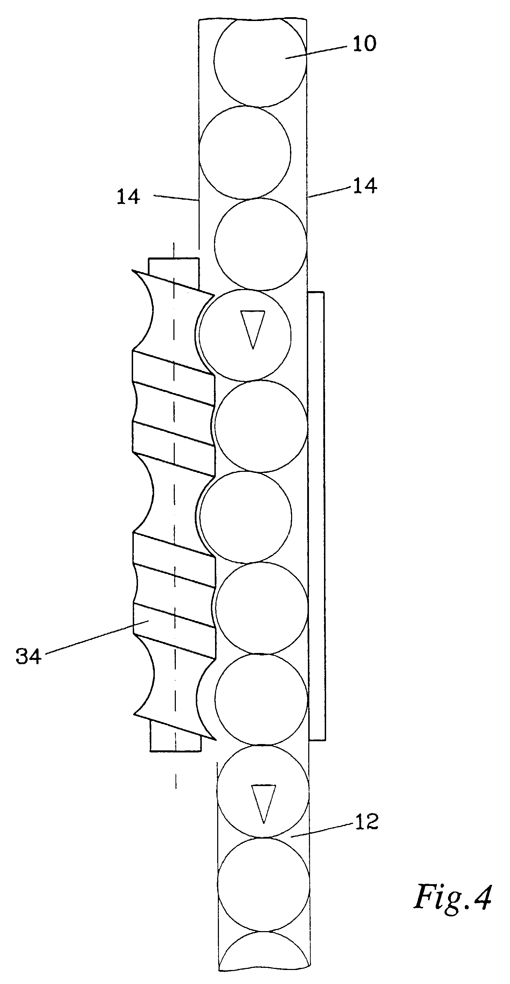

Fig. 4 zeigt ein ähnliches Ausführungsbeispiel, wobei die Einrichtung zur Stabilisierung der Lage und der Drehrichtung der Behälter 10 durch eine mit etwa waagrechter Drehachse neben dem Transporteur 12 angeordnete Schnecke 34 gebildet ist. Die Schnecke hat Gänge abwechselnd unterschiedlicher Tiefe, so daß jeder zweite Behälter 10 gegen das gegenüberliegende Geländer verschoben wird. Auch hierbei ist es wiederum möglich, an beiden Seiten des Transporteurs 12 eine Schnecke 34 anzuordnen.

## Patentansprüche

1. Verfahren zum Drehen von rotationssymmetrischen Behältern (10) an einer vorgegebenen Stelle längs einer Förderfläche (12), die seitlich durch Geländer (14) begrenzt ist und auf der die Behälter (10) unter Staudruck transportiert werden, dadurch gekennzeichnet,

    - daß an der Stelle, an der sich die Behälter drehen sollen, der Abstand der Geländer (14) das 1,2- bis 1,6fache des Durchmessers der Behälter (10) beträgt und
    - daß in Förderrichtung nach dieser Stelle von zwei aufeinanderfolgenden Behältern (10) der eine stabil gegen das eine Geländer (14) und der andere stabil gegen das andere Geländer (14) angeordnet wird.

2. Vorrichtung zum Drehen von rotationssymmetrischen Behältern (10) an einer vorgegebenen Stelle längs einer Förderfläche (12) nach dem Verfahren von Anspruch 1, wobei die Förderfläche (12) seitlich durch Geländer (14) begrenzt ist und die Behälter (10) auf der Förderfläche (12) unter Staudruck transportiert werden, dadurch gekennzeichnet,

    - daß am Ausgang der Vorrichtung eine Stabilisierungseinrichtung zur stabilen Anordnung des ersten von zwei aufeinanderfolgenden Behältern (10) an dem einen Geländer (14) und dadurch des anderen Behälters (10) an dem anderen Geländer (14) vorgesehen ist und
    - daß in dem der Stabilisierungseinrichtung vorausgehenden Bereich der Förderfläche (12) der Abstand der Geländer (14) das 1,2- bis 1,6fache des Durchmessers der Behälter beträgt.

3. Vorrichtung nach Anspruch 2, dadurch gekennzeichnet, daß die Stabilisierungseinrichtung dadurch gebildet wird, daß sich der gegenseitige Abstand der beiden seitlichen Geländer (14) in Förderrichtung auf etwa das 1,5fache des Durchmessers der Behälter (10) vergrößert und dann unter einem Winkel der seitlichen Geländer (14) zueinander von etwa 30 bis 100°, vorzugsweise 50 bis 80°, auf etwas mehr als den Durchmesser der Behälter (10) verringert.

4. Vorrichtung nach Anspruch 3, dadurch gekennzeichnet, daß die beiden seitlichen Geländer (14) in dem Bereich, in dem sich ihr Abstand unter einem Winkel von etwa 30 bis 100° zueinander wieder verringert symmetrisch zur Mittellinie der Förderfläche verlaufen.

5. Vorrichtung nach Anspruch 2, dadurch gekennzeichnet, daß die Stabilisierungseinrichtung durch ein neben der Förderfläche (12) um eine vertikale Achse frei drehbar angeordnetes Sternrad (30) gebildet wird, das jeden zweiten Behälter (10) gegen das gegenüberliegende Geländer (14) legt.

6. Vorrichtung nach Anspruch 2, dadurch gekennzeichnet, daß die Stabilisierungseinrichtung durch eine neben dem Transporteur (12) mit etwa waagtechter Achse angeordnete Schnecke (34) mit Gängen abwechselnd unterschiedlicher Tiefe gebildet wird, wobei die Anordnung so getroffen ist, daß die Gänge geringerer Tiefe jeden zweiten Behälter (10) gegen das gegenüberliegende Geländer (14) legen.

7. Vorrichtung zur Inspektion der Seitenwand oder zur Kontrolle der Etiketten von sich drehenden Behältern (10), die auf einem Transporteur (12) transportiert werden, mit einer Strahlungsquelle (18) auf der einen Seite des Transporteurs (12) und einer Erkennungseinrichtung (20) auf der anderen Seite des Transporteurs (12), dadurch gekennzeichnet, daß die Behälter (10) durch eine Vorrichtung nach einem der Ansprüche 2 bis 6 im Sichtfeld der Erfassungseinrichtung (20) gedreht werden.

8. Vorrichtung zum Transport von rotationssymmetrischen Behältern (10) auf einer Förderfläche (12) unter Staudruck, wobei auf jeder Seite der Förderfläche (12) ein Geländer (14) angeordnet ist, gekennzeichnet durch mindestens eine Vorrichtung nach einem der Ansprüche 2 bis 6.

## Claims

1. Method for rotating rotationally symmetrical containers (10) at a predetermined site along a conveying surface (12) which is limited laterally by railings (14) and on which the containers (10) are transported under backup pressure, characterized

   - in that the distance between the railings (14) is 1.2 to 1.6 times the diameter of the container at the site at which the containers are to rotate and
   - in that one of two consecutive containers (10) is arranged stable against one railing (14) and the other stable against the other railing (14) in the direction of conveyance after that site.

2. Apparatus for rotating rotationally symmetrical containers (10) at a predetermined site along a conveying surface (12) according to the method of claim 1, the conveying surface (12) being limited laterally by railings (14) and the containers (10) being transported on the conveying surface (12) under backup pressure, characterized

   - in that a stabilizing device for the stable arrangement of the first of two consecutive containers (10) at one railing (14) and thereby of the other container (10) at the other railing (14) is provided at the exit of the apparatus and
   - in that the distance between the railings (14) is 1.2 to 1.6 times the diameter of the container in the area of the conveying surface (12) preceding the stabilizing device.

3. Apparatus according to claim 2, characterized in that the stabilizing device is formed by the distance of the two lateral railings (14) between each other in the direction of conveyance increases to about 1.5 times the diameter of the containers (10) and then reduces at an angle of the lateral railings (14) to each other of about 30 to 100°, preferably 50 to 80°, to about somewhat more than the diameter of the containers (10).

4. Apparatus according to claim 3, characterized in that the two lateral railings (14) run symmetrical to the midline of the conveying surface in the area in which their distance between each other reduces at angle of about 30 to 100°.

5. Apparatus according to claims 2, characterized in that the stabilizing device is formed by a star wheel (30) which is arranged freely rotatable about a vertical axis adjacent to the conveying surface (12) and lays every second container (10) against the opposite railing (14).

6. Apparatus according to claims 2, characterized in that the stabilizing device is formed by a worm (34) which is arranged adjacent to the transporter (12), has an about horizontal axis and has threads of alternately different depth, the arrangement being such that the threads with lesser depth lay each second container (10) against the opposite railing (14).

7. Apparatus for inspection of the side wall or for monitoring the labels of rotating containers (10) which are transported on a transporter (12), the apparatus comprising a radiation source (18) on one side of the transporter (12) and an identification device (20) on the other side of the transporter (12), characterized in that the containers (10) are rotated by a device according to claims 2 to 6 within the visual field of the detection device (20).

8. Apparatus for transporting rotationally symmetrical containers (10) on a conveying surface (12) under backup pressure, a railing (14) being arranged on each side of the conveying surface (12), characterized by at least one device according to one of claims 2 to 6.

## Revendications

1. Procédé permettant de faire tourner des récipients (10) à symétrie de révolution en un emplacement préfixé le long d'une surface de transfert (12) qui est délimitée latéralement par des barrières (14) et sur laquelle les récipients (10) sont transportés sous une pression d'accumulation, caractérisée

   - en ce qu'à l'emplacement auquel les récipients doivent tourner sur eux-mêmes, l'espacement des barrières (14) vaut 1,2 à 1,6 fois le diamètre des récipients (10) et
   - en ce qu'en aval de cet emplacement suivant la direction de transfert, sur deux récipients (10) se suivant, un premier est disposé d'une manière stable en appui sur une première barrière (14) et l'autre est disposé d'une manière stable en appui sur l'autre barrière (14).

2. Dispositif permettant de faire tourner des récipients (10) à symétrie de révolution en un emplacement préfixé le long d'une surface de transfert (12) suivant le procédé de la revendication 1, la surface de transfert (12) étant délimitée latéralement par des barrières (14) et les récipients (10) étant transportés sur la surface de transfert (12) sous une pression d'accumulation, caractérisé

   - en ce qu'à la sortie du dispositif, il est prévu des moyens de stabilisation servant à disposer d'une manière stable sur une première barrière (14) le premier de deux récipients (10) se suivant et, de ce fait, disposer d'une manière stable l'autre récipient (10) sur l'autre barrière (14) et

- en ce que, dans la zone de la surface de transfert (12) qui précède les moyens de stabilisation, l'espacement des barrières (14) vaut 1,2 à 1,6 fois le diamètre des récipients.

3. Dispositif suivant la revendication 2, caractérisé en ce que les moyens de stabilisation sont formés d'une manière telle que l'espacement mutuel des deux barrières latérales (14) augmente, suivant la direction de transfert, jusqu'à approximativement 1,5 fois le diamètre des récipients (10), puis diminue, avec un angle des deux barrières (14) entre elles d'approximativement 30 à 100°, de préférence 50 à 80°, jusqu'à approximativement plus que le diamètre des récipients (10).

4. Dispositif suivant la revendication 3, caractérisé en ce, dans la zone dans laquelle l'espacement rediminue avec un angle d'approximativement 30 à 100° entre elles, les deux barrières latérales (14) s'étendent d'une manière symétrique vis-à-vis de la ligne centrale de la surface de transfert.

5. Dispositif suivant la revendication 2, caractérisé en ce que les moyens de stabilisation sont formés d'une roue étoilée (30) qui est disposée sur le côté de la surface de transfert (12), en étant libre en rotation autour d'un axe vertical et qui applique un récipient (10) sur deux en appui sur la barrière (14) située du côté opposé.

6. Dispositif suivant la revendication 2, caractérisé en ce que les moyens de stabilisation sont formés d'une vis sans fin (34) qui est disposée sur le côté du transporteur (12) avec un axe approximativement horizontal et qui comporte des pas de profondeurs différentes disposés d'une manière alternée, l'agencement étant tel que les pas de plus faible profondeur appliquent un récipient (10) sur deux en appui sur la barrière (14) située du côté opposé.

7. Installation permettant l'inspection de la paroi latérale, ou le contrôle des étiquettes, de récipients (10) tournant sur eux-mêmes qui sont transportés sur un transporteur (12), comprenant une source de rayonnement (18) sur un premier côté du transporteur (12) teint et un dispositif de reconnaissance (20) sur l'autre côté du transporteur (12), caractérisée en ce que les récipients (10) sont entraînés sont déplacés en rotation dans le champ de vision du dispositif de détection (20) au moyen d'un dispositif suivant l'une des revendications 2 à 6.

8. Installation permettant le transport de récipients (10) à symétrie de révolution sur une surface de transfert (12) sous une pression d'accumulation, une barrière (14) respective étant disposée sur chacun des deux côtés de la surface de transfert (12), caractérisée par au moins un dispositif suivant l'une des revendications 2 à 6.

*Fig.1*

*Fig.2*

*Fig.3*

*Fig.4*

$D = 55-87mm$

$L_1 = 60mm$
$L_2 = 550mm$
$L_3 = 140mm$
$L_4 = 90mm$
$a = 26mm$
$b = 40mm$

*Fig.5*